# EUROPÄISCHE PATENTSCHRIFT

(11) **EP 4 296 810 B1**
(45) Veröffentlichungstag und Bekanntmachung des Hinweises auf die Patenterteilung: **24.12.2025**
(21) Anmeldenummer: 23180453.5
(22) Anmeldetag: 20.06.2023
(51) Int. Cl.: G05B 19/4069, G05B 19/409, G05B 19/406, B23B 3/00, B23Q 1/00

(54) **WERKZEUGMASCHINE MIT EINEM SICHERHEITSGESCHÜTZTEN BETRIEBSZUSTAND**
MACHINE TOOL WITH A SAFETY-PROTECTED OPERATING CONDITION
MACHINE-OUTIL AVEC UN ÉTAT DE FONCTIONNEMENT PROTÉGÉ PAR LA SÉCURITÉ

(30) Priorität: 21.06.2022 DE 102022115444
(43) Veröffentlichungstag der Anmeldung: 27.12.2023
(73) Patentinhaber: WEILER Werkzeugmaschinen GmbH, 91448 Emskirchen (DE)
(72) Erfinder: Treczka, Kevin, 90766 Fürth (DE); Eckardt, Markus, 91617 Oberdachstetten (DE); Daum, Armin, 91364 Unterleinleiter (DE); Wäger, Markus, 91452 Wilhelmsdorf (DE)
(74) Vertreter: Mielke, Klaus

(56) Entgegenhaltungen:
- WO-A1-2015/168716
- WO-A1-2020/002610
- DE-A1- 10 347 169

## Beschreibung

Die Erfindung betrifft eine Werkzeugmaschine, insbesondere eine Dreh- bzw. Fräsmaschine, bevorzugt eine konventionelle Leit- und Zugspindeldrehmaschine, gemäß dem Oberbegriff von Anspruch 1. Diese ist mit Antrieben als Maschinenbetriebsmittel zur Durchführung von Werkstückbearbeitungen und mit manuellen Bedienelementen für die Maschinenbetriebsmittel ausgestattet.

Eine solche Werkzeugmaschine ist aus DE 103 47 169 A1 bekannt.

Bei einer Werkzeugmaschine sind die elektrische Antriebe wichtige Maschinenbetriebsmittel, um spanabhebende Werkstückbearbeitungen durchführen zu können. Bei einer beispielhaften konventionellen Leit- und Zugspindeldrehmaschine sind z.B. die Hauptspindel- und Bettschlittenantriebe solche Betriebsmittel. Da von den mit Antrieben ausgestatteten Betriebsmitteln Personengefährdungen ausgehen können, müssen diese sicher stillgesetzt werden können, um einem Bediener z.B. gefahrlose Hantierungen im Arbeitsraum der Werkzeugmaschine zu ermöglichen.

Werkzeugmaschinen sind zur Bedienung durch einen Maschinenführer mit einem bildschirmgeführten Maschinenbedienfeld, auch "Human Machine Interface" HMI genannt, ausgestattet, z.B. einem berührungsempfindlichen Display. Darauf können durch eine Maschinensteuerung anwendungs- und maschinenabhängige Bedienmasken z.B. mit interaktiven Bedien-, Melde- und Anzeigefeldern zur Anzeige gebracht werden. Ein Bediener kann damit Vorgaben eingeben, insbesondere für Bearbeitungsprogramme und die Maschinenbetriebsmittel, so dass in einem normalen, produktiven Betriebszustand der Werkzeugmaschine Werkstückbearbeitungen in einer gewünschten Weise ausgeführt werden können.

Werkzeugmaschinen, besonders konventionelle Drehmaschinen, z.B. Leit- und Zugspindeldrehmaschinen, können zusätzlich mit physikalischen, manuellen Bedienelementen insbesondere für die mit Antrieben ausgestatteten Betriebsmittel ausgestattet sein, z.B. bedienbare Schaltern, bewegliche Schutzvorrichtungen u.s.w.. Manuelle Bedienelemente für die Maschinenbetriebsmittel sind mechanisch betätigte Stellglieder, deren Zustände von einem Bediener händische veränderbar sind, und deren Schalt- bzw. Betriebszustände insbesondere von der Maschinensteuerung elektronisch abfragbar sind. Bei einer Drehmaschine sind dies z.B. die Stellung des Hauptspindelschalters zur Ingangsetzung der Hauptspindel, die Zustände von Sicherheitseinrichtungen, z.B. die Stellung einer Spindelschutzhaube, die Stellungen von Schaltern zur Vorwahl der Achsen und deren Bewegungsrichtungen, Vorrichtungen zur Auswahl der Anschlagachsen usw.. Bedienelemente können vom Bediener manuell zumindest in zwei Schaltzustände versetzt werden.

Im ersten Schaltzustand eines manuellen Bedienelements ist das dazugehörige Maschinenbetriebsmittel freigegeben und ein zugeordneter Antrieb kann anlaufen.

Handelt es sich bei einem manuellen Bedienelement z.B. um einen Spindelwahlschalter, so befindet sich dieser in einer den Rechts- oder Linkslauf des Hauptspindelantriebs, d.h. dem zugeordneten Maschinenbetriebsmittel, aktivierenden eingeschalteten Position. Eine manuell verschiebbare Spindelschutzhaube als ein weiteres beispielhaftes Bedienelement ist im ersten Zustand vorgeschoben und nimmt eine das Werkstückspannfutter abdeckende Position ein. Dabei wird von der Spindelschutzhaube ein Freigabesignal erzeugt und an die Maschinensteuerung übermittelt. Der Hauptspindelantrieb als das zugeordnete Maschinenbetriebsmittel ist freigegeben und kann anlaufen.

Im zweiten Schaltzustand sind manuelle Bedienelemente für Maschinenbetriebsmittel, insbesondere für angetriebene Betriebsmittel, vom Bediener in eine Grundposition überführt worden, bei der ein Anlauf des dazugehörigen Antriebs und eine damit verbundene Personengefährdung ausgeschlossen sind. Dieser wird nachfolgend als sicherer Grundzustand der manuellen Betriebsmittel bezeichnet.

Ein beispielhafter Spindelwahlschalter befindet sich dann in einer ausgeschalteten Mittenposition, d.h. es ist keine motorische Drehbewegung des Hauptspindelantriebs möglich. Eine beispielhafte Spindelschutzhaube nimmt dann eine Position ein, bei der diese zur Seite geschoben und das Werkstückspannfutter für einen Bediener zugänglich ist. Dabei wird von der Spindelschutzhaube kein Freigabesignal an die Maschinensteuerung übermittelt, so dass der Hauptspindelantrieb als das zugeordnete Betriebsmittel gesperrt ist. Ein beispielhafter Drehgeber ist dabei vom Benutzer in eine Ausgangs- oder Nullposition zurückgedreht worden.

Bei einer Werkzeugmaschinen besteht das Problem, dass ein Bediener besonders darauf achten muss, dass sich alle manuellen Bedienelemente in einem sicheren Grundzustand befinden, wenn er Hantierungen an der Werkzeugmaschine vornehmen möchte, die noch keine unmittelbare Werkstückbearbeitung zur Folge haben sollen. Dies kann z.B. in einem Einrichtbetrieb auftreten, wenn ein Benutzer bei einer geplanten, komplizierten Werkstückbearbeitung vorab probeweise Bedienungen vornehmen möchte. Auch bei der Einweisung von Hilfspersonen und Auszubildenden kann ein Anlauf der Antriebe von Maschinenbetriebsmitteln unerwünscht sein. Dabei kann der Anlauf eines Betriebsmittels, dessen manuelles Bedienelement sich versehentlich nicht im sicheren Grundzustand befinden, eine erhebliche Personengefährdung hervorrufen.

Der Erfindung liegt die Aufgabe zu Grunde eine Werkzeugmaschine derart weiterzubilden, dass eine realitätsnahe Bedienbarkeit der Werkzeugmaschine ohne das Auftreten von personengefährdenden Maschinenzuständen ermöglicht wird.

Die Aufgabe wird gelöst mit den kennzeichnenden Merkmalen von Anspruch 1. Vorteilhafte weitere Ausgestaltungen der Erfindung sind in den Unteransprüchen angegeben.

Die erfindungsgemäße Werkzeugmaschine weist eine Maschinensteuerung auf, die einen produktiven Betriebszustand zur Werkstückbearbeitung und einen sicherheitsgeschützten Betriebszustand für eine realitätsnahe Bedienbarkeit der Werkzeugmaschine bereitstellt. Mittels eines bildschirmgeführten Maschinenbedienfelds kann die Werkzeugmaschine von einem Bediener zwischen dem produktiven und sicherheitsgeschützten Betriebszustand umgeschaltet werden kann.

Nachfolgend werden der produktive Betriebszustand auch als produktive Maschinenbedienebene und der sicherheitsgeschützte Betriebszustand auch als eine weitere Bedienebene eines virtuellen Zwillings der Werkzeugmaschine bezeichnet.

Erfindungsgemäß sind im sicherheitsgeschützten Betriebszustand die manuellen Bedienelemente für eine realitätsnahe Bedienbarkeit der Werkzeugmaschine weiterhin aktiv, d.h. können von einem Maschinenführer wie im produktiven Betriebszustand bedient werden. Jedoch sind für die tatsächliche Durchführung von Werkstückbearbeitungen erforderlichen Antriebe der Maschinenbetriebsmittel, insbesondere durch die Maschinensteuerung, deaktiviert. Dieser sicherheitsgeschützte Betriebszustand ermöglicht einem Benutzer in der Art einer Simulation eine virtuelle Bedienung der realen Werkzeugmaschine, wobei er jeweils erforderliche Hantierungen direkt an den weiterhin aktiven manuellen Bedienelementen realitätsnah durchführen kann, ohne hierdurch aber Antriebe von Maschinenbedienmitteln tatsächlich in Gang zu setzen. Dies wird erfindungsgemäß dadurch ermöglicht, dass die Maschinensteuerung im sicherheitsgeschützten Betriebszustand virtuelle Nachbildungen von Schaltzuständen der manuellen Bedienelementen und/oder der Bewegungen von Antrieben und/oder der Bearbeitungen von Werkstücken wie im produktiven Betriebszustand bereitstellt.

Die Erfindung ist besonders für eine Werkzeugmaschine geeignet, mit der ein Maschinenführer nicht nur Werkstückbearbeitungen in der produktiv Maschinenbedienebene durchführbar sind, sondern von ihm stattdessen in einer weiteren Bedienebene eines sicherheitsgeschützten Betriebszustands der Werkzeugmaschine auch gefahrlos Bedienungen allgemeiner Art vorgenommen werden sollen.

Die erfindungsgemäße Werkzeugmaschine nimmt in dem erfindungsgemäßen zusätzlichen, sicherheitsgeschützten Betriebszustand die Funktion eines Simulators ein. Dessen realitätsnahe Bedienbarkeit durch die virtuellen Nachbildungen insbesondere der Schaltzustände der manuellen Bedienelemente bzw. der Bewegungen der Antriebe in den Vorschubachsen der Maschinenbetriebsmittel ist mit den Funktionen eines Flug- oder Fahrsimulators vergleichbar. Dieser Betriebszustand kann auch als ein virtueller Zwilling der realen Werkzeugmaschine bezeichnet werden.

Einem Maschinenführer wird im sicherheitsgeschützten Betriebszustand auf dem bildschirmgeführten Maschinenbedienfeld der Werkzeugmaschine eine realitätsnahe Bedienbarkeit ermöglicht, d.h. bei ausgeschalteten Antrieben aber im Übrigen uneingeschränkter Bedienbarkeit und virtueller Funktionsfähigkeit. Eine Person kann Bedienhandlungen, z.B. zu Übungs- und Testzwecken vor einer tatsächlichen Ausführung einer Werkstückbearbeitung, simulieren. Dieser Betriebszustand kommt auch Auszubildenden zugute, die im Rahmen von Schulungen stufenweise an eine sichere und fehlerfreie Bedienung der Werkzeugmaschine herangeführt werden sollen.

Diese Arbeitsweise wird einer Bedienperson im sicherheitsgeschützten Betriebszustand, bei dem ein virtueller Zwilling der realen Werkzeugmaschine simuliert wird, besonders vorteilhaft dadurch ermöglicht, dass die insbesondere elektronischen Funktionssignale der manuellen Bedienelemente weiterhin ausgegeben und von der Maschinensteuerung verarbeitet werden. Jedoch ruft eine Betätigung eines manuellen Bedienelementes bzw. die Auswahl einer Funktionen auf dem Maschinenbedienfeld keinen tatsächlichen Start der Antriebe von Maschinenbetriebsmitteln der Werkzeugmaschine hervor. Im sicherheitsgeschützten Betriebszustand wird zwar die Anwahl einer Maschinenfunktion und die Betätigung eines Bedienelement durch eine Person von Maschinensteuerung zwar datentechnisch erfasst, hieraus aber die Bewegung eines dazugehörigen Antriebs nur virtuell nachgebildet und auf dem Maschinenbedienfeld visualisiert. Ein Start realer Maschinenkomponenten, die einer Maschinenfunktion zugeordnet sind, wird in dieser Betriebsart verhindert, insbesondere zum Personenschutz und zur Vermeidung von Beschädigungen an der Werkzeugmaschine sowie der Herstellung fehlerhafter Werkstücke.

Die Erfindung bietet den weiteren Vorteil, dass sowohl der produktive Betriebszustand zur Werkstückbearbeitung als auch der sicherheitsgeschützte Betriebszustand von einem Maschinenführer über ein einziges bildschirmgeführtes Maschinenbedienfeld gesteuert werden können. Ein solches wird nachfolgend auch als Human Machine Interface bezeichnet und mit HMI abgekürzt. Die Umschaltung zwischen den Betriebszuständen und die Visualisierung jeweils nur eines Betriebszustands auf einem einzigen HMI ermöglicht einem Bediener eine übersichtliche, strukturierte Bedienung der Werkzeugmaschine. Hiermit sind eine sichere Unterscheidung und eindeutige Abgrenzung der Betriebszustände möglich. Bedienungsfehler durch unrichtige Zuordnungen werden vermieden, die besonders bei einer Verteilung unterschiedlicher Betriebszustände auf mehrere Human Machine Interfaces mit separaten Displays auftreten können.

Bei einer weiteren, besonders vorteilhaften Ausführung der Erfindung zeigt die Maschinensteuerung auf dem bildschirmgeführten Maschinenbedienfeld HMI entweder Bedienmasken einer produktiven Maschinenbedienebene für die Werkstückbearbeitungen im produktiven Betriebszustand, nachfolgend abgekürzt mit BOM, oder Bedienmasken einer weiteren Bedienebene für die virtuellen Nachbildungen im sicherheitsgeschützten Betriebszustand, nachfolgend abgekürzt mit BOX, an.

Die zentrale Bedienebene im produktiven Betriebszustand ist die Maschinenbedienebene. Ein Bediener kann mit deren Bedienmasken BOM am Maschinenbedienfeld HMI zur Durchführung von Werkstückbearbeitungen z.B. Maschinenparameter anwendungsabhängig verändern, Vorgaben für Maschinenbetriebsmittel eingeben und insbesondere eine aktiven Zugriff auf die Antriebe, um Bewegungen entlang der Vorschubachsen der Werkzeugmaschine auslösen und anhalten.

Bei einer weiteren Ausführung der Erfindung können zusätzlich ergänzende Daten bereitgestellt werden, insbesondere maschinen-, benutzungs- und bearbeitungsrelevante Daten. Dies können sein z.B. Werkzeugparameter sowie dazugehörige Schnittdaten, Geometriedaten eines Werkstückes, Koordinaten eines Arbeitsraumes, Werkstoffparameter, uvm..

Die Bedienmasken BOX sind der weiteren Bedienebene im sicherheitsgeschützten Betriebszustand zugeordnet und ermöglichen einem Bediener einen Zugriff auf einen virtuellen Zwilling der Werkzeugmaschine. Dieser stellt virtuelle Nachbildungen insbesondere von Schaltzuständen der manuellen Bedienelementen und/oder der Bewegungen von Antrieben und/oder der Bearbeitungen von Werkstücken, vergleichbar mit dem produktiven Betriebszustand, zur Verfügung,
Bei einer weiteren Ausführung der Erfindung können auch zusätzlich Informationen dargestellt werden, welche über die produktiven Kernfunktionen einer Werkzeugmaschine hinausgehen. Dies können sein z.B. Datenbanken mit insbesondere technologischen Inhalten, Tutorials und Lernprogramme, uvm..

Diese Ausführung der Erfindung bietet den besonderen Vorteil, dass den beiden Betriebszuständen vorteilhaft separate Bedienmasken zugeordnet sind, d.h. Bedienmasken BOM für den produktiven Betriebszustand und Bedienmasken BOX für den sicherheitsgeschützten Betriebszustand. Dies ermöglicht eine logisch getrennte, abwechselnde Bedienung von unterschiedlichen Anwendungen einerseits für Werkstückbearbeitungen bzw. andererseits für realitätsnahe Bedienungen der Werkzeugmaschine in einem sicherheitsgeschützten Betriebszustand auf einem einzigen HMI. Es ist damit einem Bediener ein sicherer Wechsel zwischen verschiedenen Betriebszuständen, eine übersichtliche, strukturelle Bedienung der Werkzeugmaschine sowie eine eindeutigen Abgrenzung und sichere, fehlerfreie Unterscheidung der Betriebszustände über die jeweils zugeordneten Bedienmasken BOM bzw. BOX möglich. Anwendungen und Eingaben produktiver bzw. virtueller Art können fehlerfrei auf einem einzigen Maschinenbedienfeld HMI ausgeführt werden.

Besonders vorteilhaft wird einem Bediener mit Hilfe der beiden Gruppen an Bedienmasken BOM und BOX auch ein fliegender Wechsel zwischen den beiden Betriebszuständen erleichtert. So kann ein Maschinenführer z.B. eine Werkstückbearbeitung mit den Bedienmasken BOM im produktiven Betriebszustand kurzzeitig unterbrechen und die Werkzeugmaschine in den sicherheitsgeschützten Betriebszustand umschalten. Es ist nun möglich weiteren Personen, z.B. Auszubildende, mittels der Bedienmasken BOX direkt an der Werkzeugmaschine Erläuterungen zukommen zu lassen. Eine solche, in eine tatsächliche Werkstückbearbeitung eingeschobene Schulung an den virtuellen Nachbildungen der Werkzeugmaschine, d.h. durch tatsächliche Bedienung manueller Bedienelement wie im produktiven Betrieb aber bei deaktivierten Antrieben, ist besonders anschaulich und einprägsam. Nach Abschluss der Erläuterungen kann der Maschinenführer die Werkzeugmaschine wieder in den produktiven Betriebszustand zurückschalten und die Werkstückbearbeitung mittels der Bedienmasken BOM fortsetzen.

Eine Werkzeugmaschine ist erfindungsgemäß mit einem manuell bedienbaren Sicherheitsschalter ausgestattet, insbesondere einem sogenannten Not-AusSchalter. Dieser ist für einen Maschinenführer auf dem Gehäuse der Werkzeugmaschine vorteilhaft leicht zugänglich. Hiermit ist eine zentrale Stillsetzung bzw. Freigabe der Antriebe der Maschinenbetriebsmittel möglich. Einerseits kann hiermit die Werkzeugmaschine vom Maschinenführer, z.B. in einem Notfall, schlagartig stillgesetzt werden. Laufende Werkstückbearbeitungen werden dabei unterbrochen. Der Sicherheitsschalter nimmt dann einen Schaltzustand ein, der nachfolgend mit "Freigabe AUS" bezeichnet wird. Für eine Einschaltung bzw. Wiederinbetriebnahme der Werkzeugmaschine ist andererseits es erforderlich, dass der Sicherheitsschalter außer Eingriff gebracht wird. Er nimmt dann einen Schaltzustand ein, der nachfolgend mit "Freigabe EIN" bezeichnet wird.

Gemäß der Erfindung überwacht die Maschinensteuerung den Zustand des Sicherheitsschalters und gibt eine Umschaltung vom produktiven in den sicherheitsgeschützten Betriebszustand nur dann frei, wenn diese sowohl am Sicherheitsschalter den Zustand "Freigabe AUS" als auch bei den Maschinenbetriebsmitteln eine Stillsetzung der Antriebe detektiert hat. Hiermit sind auf eine besonders sichere Weise die Voraussetzungen dafür geschaffen, dass die Werkzeugmaschine in den sicherheitsgeschützten Betriebszustand übergehen kann. Ein Maschinenführer wird hierdurch entlastet, da er nicht z.B. durch eine Beobachtung der Werkzeugmaschine selbst feststellen muss, ob alle Antrieb tatsächlich zur Ruhe gekommen sind. Dies kommt insbesondere auch ungeübten Bedienern und Auszubildenden zugute.

Ein Bediener muss auch eine Umschaltung vom sicherheitsgeschützten in den produktiven Betriebszustand, d.h. eine Rückschaltung in die Werkstückbearbeitungen ermöglichende produktive Maschinenbedienebene, mit Sorgfalt durchführen. Dabei kann das Problem auftreten, dass sich manuelle Bedienelemente, z.B. nach Durchführung einer Bedienung virtueller Nachbildungen im sicherheitsgeschützten Betriebszustand zu Vorführungszwecken, noch in einem Schaltzustand befinden, der bei Aktivierung des produktiven Betriebszustands einen plötzlichen, unkontrollierten Anlauf von Antrieben zur Folge hat. Hierdurch können Personengefährdungen und Beschädigungen an der Werkzeugmaschine bzw. einem Werkstück auftreten.

Bei einer weiteren, vorteilhaften Ausführung der Erfindung überwacht die Maschinensteuerung auch die Schaltzustände der manuellen Bedienelemente und gibt eine Umschaltung vom sicherheitsgeschützten in den produktiven Betriebszustand nur dann frei, wenn diese sowohl am Sicherheitsschalter den Zustand "Freigabe EIN" als auch an den manuellen Bedienelementen die Einnahme einen sicheren Grundzustands detektiert hat. Wird von der Maschinensteuerung festgestellt, dass beide Bedingung nicht gleichzeitig erfüllt sind, so wird eine Umschaltung so lange blockiert, bis der Maschinenführer alle manuellen Bedienelemente überprüft und eventuell betroffene einzelne Bedienelemente ebenfalls in den sicheren Grundzustand überführt hat. Hiermit sind auf die Voraussetzungen dafür geschaffen, dass die Werkzeugmaschine wieder in den produktiven Betriebszustand zur Werkstückbearbeitung übergehen kann. Ein Maschinenführer wird auch hierdurch entlastet, da er nicht z.B. durch eine Kontrolle aller manuellen Bedienelemente selbst feststellen muss, ob sich diese ordnungsgemäß im sicheren Grundzustand befinden. Dies kommt insbesondere auch ungeübten Bedienern und Auszubildenden zugute.

Bei einer weiteren vorteilhaften Ausführung der Erfindung kann die Werkzeugmaschine mit einer zusätzlichen Sicherheitseinheit ausgestattet sein. Dabei kann es sich um eine eigenständige, elektronische Baugruppe handeln, die von der Maschinensteuerung hardwaremäßig getrennt ist. Bei einer weiteren Ausführung kann die Funktion der zusätzlichen Sicherheitseinheit auch softwarewaremäßig nachgebildet sein. Deren Programmroutinen können von der Maschinensteuerung vorzugsweise in einer isolierten Anwendungsumgebung ausgeführt werden. Eine zusätzliche Sicherheitseinheit ermöglicht eine vom produktiven Betriebszustand zur Werkstückbearbeitung hardware- oder softwaremäßig isolierte, besonders sichere Überwachung der Zustände einer Werkzeugmaschine.

Die zusätzliche Sicherheitseinheit stellt hierzu ein sicheres Freigabesignal in der Art einer Quittierung bereit, wenn sich die Werkzeugmaschine in einem sicher stillgesetzten Zustand befindet. Hierzu überwacht die Sicherheitseinheit vorteilhaft die Eingänge insbesondere der Antriebsachsen, d.h. bei einer konventionellen Drehmaschine die Bewegungsachsen in x-, y- und z- Richtung, sowie die Zustände von Steuer- und Signalgebern und des Sicherheitsschalters. Ein aktives Freigabesignal zur Umschaltung vom produktiven in den sicherheitsgeschützten Betriebszustand wird erst dann ausgegeben, wenn von der Sicherheitseinheit detektiert wurde, dass zumindest die Antriebe der Achsen nicht aktiviert bzw. sicher stillgesetzt sind. Vorteilhaft kann zusätzlich detektiert werden, dass auch der Sicherheitsschalter aktiviert wurde und sich im Zustand "Freigabe AUS" befindet.

Erst wenn die Maschinensteuerung sowohl eine manuelle Betätigung des Sicherheitsschalters detektiert als auch ein sicheres Freigabesignal von der Sicherheitseinheit bereitsteht, wird eine vom Bediener gewünschte Umschaltung vom produktiven in den sicherheitsgeschützten Betriebszustand freigegeben.

Die Erfindung und weitere vorteilhafte Ausführungen derselben werden anhand der nachfolgend kurz angeführten Figuren näher erläutert. Dabei zeigen
- Fig. 1: eine "Beispielmaschine - konventionelle Drehmaschine",
- Fig. 2: Programmablaufdiagramm "Freigabe produktiver Betriebszustand mit den Bedienmasken der produktiven Maschinenbedienebene",
- Fig. 3: Programmablaufdiagramm "Freigabe Bedienmasken einer weiteren Bedienebene für den sicherheitsgeschützten Betriebszustand",
- Fig. 4: Programmablaufdiagramm "Aktivierung Bedienmasken einer weitere Bedienebene für den sicherheitsgeschützten Betriebszustand", und
- Fig. 5: Programmablaufdiagramm "Signalübertragung einer weiteren Bedienebene für den sicherheitsgeschützten Betriebszustand".

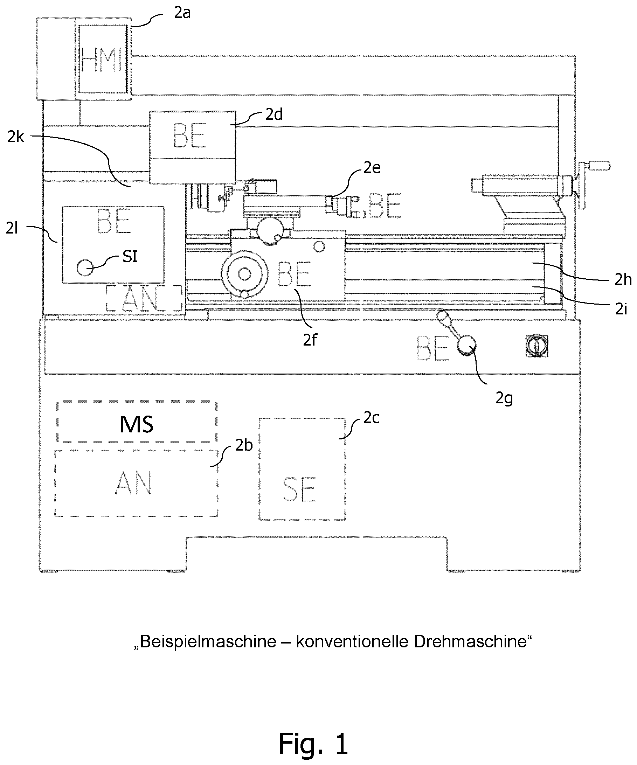

In Fig. 1 ist beispielhaft eine konventionelle Leit- und Zugspindeldrehmaschine mit einer Leitspindel 2h und einer Zugspindel 2i symbolisch dargestellt. Die Bezugszeichen verweisen auf einzelne Maschinenkomponenten und Bedienelemente. Die abgebildete beispielhafte Drehmaschine ist u.a. ausgestattet mit einem HMI als bildschirmgeführtes Maschinenbedienfeld 2a und Antrieben AN für die Vorschubachsen, z.B. einem Hauptspindelantrieb 2k und einem Zugspindelantrieb 2b. Weiterhin sind durch einen Bediener betätigbare manuelle Bedienelementen BE vorhanden. Diese sind bevorzugt mit Signalgebern zur Aktivierung und Abschaltung von Betriebsmitteln der Maschine versehen.

Die in Fig. 1 gezeigte beispielhafte Ausführung einer Werkzeugmaschine weist zudem eine mögliche Ergänzung in Form einer zusätzlichen Sicherheitseinheit SE zur Bildung eines sicheren Freigabesignals auf. Diese ist im unteren Bereich des Maschinengehäuses symbolisiert. Dabei kann als es sich um eine Sicherheitsbaugruppe handeln, d.h. ein separates elektronisches Steuergerät 2c. Diese überwacht Achsenbewegungen und Signale von Bedienelementen, worüber ein Start von Antrieben der Werkzeugmaschine ausgelöst werden könnte. Die Sicherheitseinheit kann auch programmgesteuert von der Maschinensteuerung MS z.B. durch eine Ergänzung der Steuerungssoftware funktionell realisiert werden.

Die in Fig. 1 gezeigte Ausführung einer Werkzeugmaschine am Beispiel einer konventionellen Leit- und Zugspindeldrehmaschine ist mit einem zentralen Sicherheitsschalter SI ausgestattet. Dieser ist vorteilhaft auf der einem Bediener zugewandten Frontseite des Spindelstocks 2l an der linken Seite der Drehmaschine angebracht und in räumlicher Nähe unterhalb des Touchscreens eines Maschinenbedienfelds HMI platziert. Bei dem Sicherheitsschalter kann es sich z.B. um einen mechanisch betätigbaren Schlüsselschalter oder eine elektronische Lese- und Signaleinheit handeln, die z.B. mittels eines RFID-Chips berührungslos freigebbar oder sperrbar ist.

Die Zustände der manuell betätigbaren Bedienelemente BE werden bevorzugt über elektronische Signalgeber abgefragt. Dabei kann es sich z.B. um Taster, Schalthebel, Positionsschalter, Wegmesssysteme handeln. Im Beispiel der konventionellen Leit- und Zugspindeldrehmaschine von Fig. 1 sind z.B. ein Endschalter an der manuell verschiebbaren Spindelschutzhaube 2d, ein Wegmesssystem am Oberschlitten 2e, ein Wegmesssystem am Bettschlitten 2f sowie der Hauptschalter 2g am Maschinengehäuse als manuelle Bedienelemente BE mit überwachbaren elektronischen Signalgebern ausgeführt.

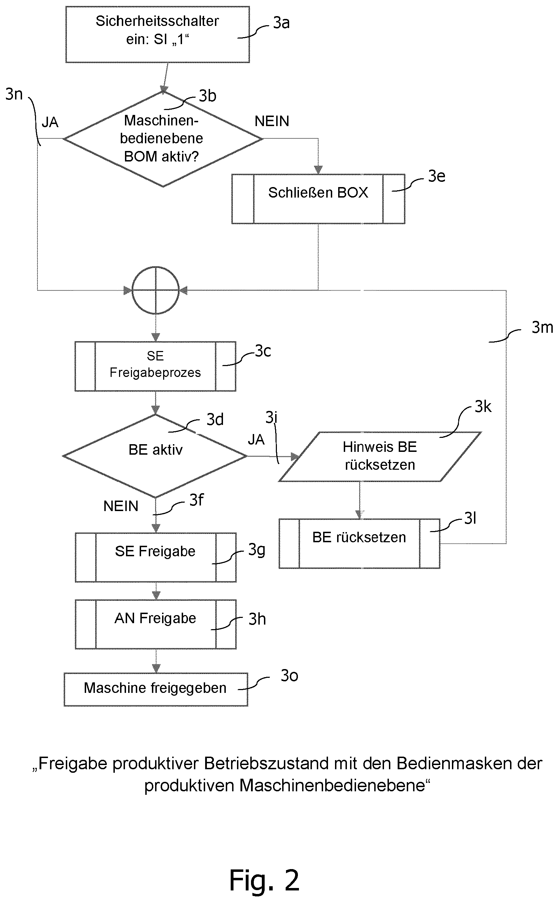

Anhand der Programmablaufdiagramme in den Figuren 2 bis 5 werden bei einer besonders vorteilhaften Ausführung der Erfindung mögliche Wechsel zwischen dem produktiven Betriebszustand der Werkzeugmaschine zur Werkstückbearbeitung mit den dazugehörigen Bedienmasken BOM und einem sicherheitsgeschützten Betriebszustand mit den dazugehörigen Bedienmasken BOX einer zusätzlichen Bedienebene für virtuelle Nachbildungen wie im produktiven Betriebszustand veranschaulicht. Dabei symbolisiert die Abkürzung BOX eine beispielhafte Bedienmaske aus einer möglichen Gruppe von weiteren Bedienmasken BO1, BO2, BO3 bis BOX.

Gemäß einer bevorzugten Weiterbildung der Erfindung ist eine Voraussetzung für eine Freigabe einer Umschaltung der Maschinensteuerung vom produktiven in den sicherheitsgeschützten Betriebszustand sowie für eine Aktivierung der Bedienmasken BOX an Stelle der Bedienmasken BOM der produktiven Maschinenbedienebene eine sichere Stillsetzung der Werkzeugmaschine. Hierzu sind vom Bediener der zentrale Sicherheitsschalter SI manuell zu betätigen, d.h. der Zustands "0" Freigabe AUS zu aktivieren, und von der Maschinensteuerung die Antriebe AN der Achsen außer Betrieb zu setzen. Bei einer beispielhaften Drehmaschine werden dabei die Antriebe AN z.B. des Bett- und Planschlittens in z- und x-Achse, bzw. bei einer Fräsmaschine in x-, y- und z-Achse, ausgeschaltet.

Ein Bediener kann nun auf dem HMI die Bedienmasken BOM der produktiven Maschinenbedienebene verlassen und auf Bedienmasken BOX der weiteren Bedienebene für die virtuellen Nachbildungen im sicherheitsgeschützten Betriebszustand zugreifen. Bei einer bevorzugten, weiteren Ausführung der Erfindung kann durch die Maschinensteuerung auch automatisch von den Bedienmasken BOM auf die Bedienmasken BOX umgeschaltet werden, wenn der Eintritt der beiden Voraussetzungen Freigabe AUS und Stillsetzung aller Antriebe detektiert wurde.

Nun kann ein Bediener im sicherheitsgeschützten Betriebszustand auf die Bedienmasken BOX der zusätzlichen Bedienebene zugreifen und gefahrlos Eingaben an den manuellen Bedienelementen für die Maschinenbetriebsmittel vornehmen. Auf Grund der erfindungsgemäßen virtuellen Nachbildungen verhält sich die Werkzeugmaschine für einen Bedieners wie ein virtueller Zwilling. Bei diesem wird der produktive Betriebszustand der Werkzeugmaschine trotz der Stillsetzung der Antrieb bei im übrigen realitätsnaher Bedienbarkeit simuliert. Dabei ist es möglich, reale Signaleingaben an manuellen Bedienelementen BE der Maschine, z.B. Tastern, Schaltern und Wegmesseinrichtungen, weiterhin vorzunehmen, um Anwendungen über die Bedienmasken BOX ohne die Gefahr eines ungewollten Ingangsetzens der Maschine mittels virtuellerer Nachbildungen z.B. zu Schulungszwecken oder zur Fehlersuche zu betreiben.

Für ein Wiederherstellung des produktiven Betriebszustands der Werkzeugmaschine, d.h. eine Umschaltung der Maschinensteuerung vom sicherheitsgeschützten Betriebszustanden in den zugeordneten Bedienmasken BOX dieser zusätzlichen Bedienebene in den produktiven Betriebszustand mit den Bedienmasken BOM der Maschinenbedienebene ist vom Bediener wiederum der zentrale Sicherheitsschalter SI zu betätigen und dort der Zustand "1" Freigabe EIN zu aktivieren. Zudem ist erfindungsgemäß von der Maschinensteuerung die sichere Grundposition alle manuellen Bedienelemente zu detektieren, so dass ein zugehöriges Maschinenbetriebsmittel nicht automatisch aktiviert wird. Sind beide Voraussetzungen erfüllt, so können vom Bediener die Antriebe AN wieder freigegeben und mit dem manuellen Bedienelement "Leistung EIN" die Maschine eingeschaltet werden. Nun kann mit der Werkzeugmaschine wieder herkömmlich gearbeitet werden, d.h. es können Werkstückbearbeitungen durchgeführt werden. Bei einer vorteilhaften weiteren Ausführung der Erfindung können von der Maschinensteuerung auf dem HMI die Bedienmasken BOX auch automatisch geschlossen und die Bedienmasken BOM der Maschinenbedienebene wieder angezeigt werden.

Wie vorstehend bereits ausgeführt wurde, ermöglichen die Bedienmasken BOX im sicherheitsgeschützten Betriebszustand z.B. die Durchführung von Tutorials. Bei einem solchen Schulungsprogramm kann mit Hilfe eines virtuellen Zwillings der Werkzeugmaschine eine Aufforderung an einen Bediener zur testweisen Aktivierung einer antriebsrelevanten Funktion durch Betätigung des dazugehörigen manuellen Bedienelements BE ausgegeben werden, z.B. Starten der Hauptspindel. Eine solche reale Bedienung ruft auf Grund der nur virtuellen Nachbildung von Antriebsbewegungen keine tatsächliche Werkstückbearbeitung hervor. Wird daraufhin vom Bediener das dazugehörige Bedienelement BE versehentlich nicht wieder in den sicheren Grundzustand zurückgestellt, würde die Werkzeugmaschine beim Zurückstellen des Sicherheitsschalters SI in den Zustand "1" Freigabe EIN sowie dem Wechsel in den produktiven Betriebszustand automatisch anlaufen und die Personensicherheit gefährdet sein. Dies wird gemäß einer besonders vorteilhaften Ausführung der Erfindung dadurch verhindert, dass eine Umschaltung erst bei einer Detektion des sicheren Grundzustands der manuellen Bedienelemente freigegeben wird. Ist dies nicht der Fall, kann dies dem Bediener durch Anzeige von Fehlermeldungen auf dem HMI insbesondere auf den Bedienmasken BOX angezeigt werden. Erst nachdem ein Bediener diesen Aufforderungen nachgekommen ist, d.h. alle Bedienelement wieder in den sicheren Grundzustand zurückgestellt hat und dies von der Maschinensteuerung detektiert wurde, wird die Maschine freigegeben.

Bei einer weiteren Ausführung kann hierzu von einer zusätzlichen Sicherheitseinheit ein separates, sicheres Freigabesignal bereitgestellt werden. Ein automatischer Anlauf wird dadurch unterbunden, dass mittels der zusätzlichen Sicherheitseinheit eine permanente Abfrage auf betätigte Funktionen an den manuellen Bedienelementen BE stattfindet. Wurde eine Funktion an der Werkzeugmaschine gestartet, jedoch nur in einem virtuellen Abbild der Maschine VZ auf der zusätzlichen Bedienebene BOX scheinbar ausgeführt und nicht wieder den sicheren Grundzustand zurückgestellt, wird der Anlauf eine verhindert, da die zusätzliche Sicherheitseinheit noch kein sicheres Freigabesignal bereitstellt.

### Beispiel "Freigabe produktiver Betriebszustand mit den Bedienmasken BOM der produktiven Maschinenbedienebene":

Dieses Beispiel wird am Programmablaufdiagramm in Fig. 2 und den Bezugszeichen 3a bis 3o der Prozessschritte erläutert. Es betrifft eine Umschaltung vom sicherheitsgeschützten Betriebszustand mit den Bedienmasken BOX einer weiteren Bedienebene auf den produktiven Betriebszustand mit den Bedienmasken BOM der produktiven Maschinenbedienebene. Diese Rückschaltung vom sicherheitsgeschützten in den produktiven Betriebszustand ist besonders sicherheitskritisch, da Antriebe automatisch anlaufen könnten, wenn vor einer Rückschaltung nicht sichergestellt ist, dass sich alle Bedienelemente BE in einer sicheren Grundposition befinden.

Hierzu sind vom Bediener der Sicherheitsschalter SI auf den Zustand "1" Freigabe EIN zu stellen (3a) und auf dem HMI die Bedienmasken BOM der produktiven Maschinenbedienebene anzuwählen (3b). Erkennt die Maschinensteuerung, dass die Bedienmasken BOX der zusätzlichen Bedienebene noch aktiv sind, so werden diese bei der Umstellung des Sicherheitsschalter SI in "1" vorteilhaft automatisch geschlossen (3e) und der Programmablauf fortgesetzt. Erkennt die Maschinensteuerung, dass die Bedienmasken BOM der produktiven Maschinenbedienebene bereits aktiv sind, so wird der Programmablauf unmittelbar fortgesetzt (3n).

Erfindungsgemäß wird nun eine Abfrage der Zustände der manuellen Bedienelemente BE durchgeführt (3d). Ist eine Werkzeugmaschine mit einer zusätzlichen Sicherheitseinheit SE ausgestattet, so wird dieser Freigabeprozess von der Sicherheitseinheit SE durchgeführt (3c). Andernfalls wird dieser von der Maschinensteuerung insbesondere mit Hilfe zusätzlicher Sicherheitssoftwarekomponenten ausgeführt. Dabei wird abgefragt, ob sich manuelle Bedienelemente BE noch in einem aktiven, d.h. Antriebe aktivierenden, Schaltzustand befinden (3d).

Wird dabei detektiert, dass sich alle Bedienelemente BE in der sicheren Grundstellung befinden (3f), die ein automatisches Anlaufen von Antrieben ausschließt, werden die Antriebe freigegeben (3h) und damit die gesamte Maschine (3o). Eine Aktivierung der durch einen Bediener ist nun möglich. Sofern eine zusätzliche Sicherheitseinheit SE vorhanden sein sollte, wird dies mit Hilfe eines sicheren Freigabesignals organisiert (3g). Wird jedoch detektiert, dass sich noch manuelle Bedienelemente BE in einer nicht sicheren Schaltstellung befinden (3i), wird ein Bediener durch eine Hinweismeldung am HMI aufgefordert (3k), die Bedienelemente BE in die sichere Grundstellung rückzusetzen (3l). Dies wird so lange wiederholt (3m), bis sich alle manuellen Bedienelemente BE in der gewünschten Grundstellung befinden. Danach ist die Freigabe für die Antriebe (3h) erreicht und es kann mit einer produktiven Werkstückbearbeitung begonnen werden (3o).

### Beispiel "Freigabe der Bedienmasken BOX einer weiteren Bedienebene für einen sicherheitsgeschützten Betriebszustand"

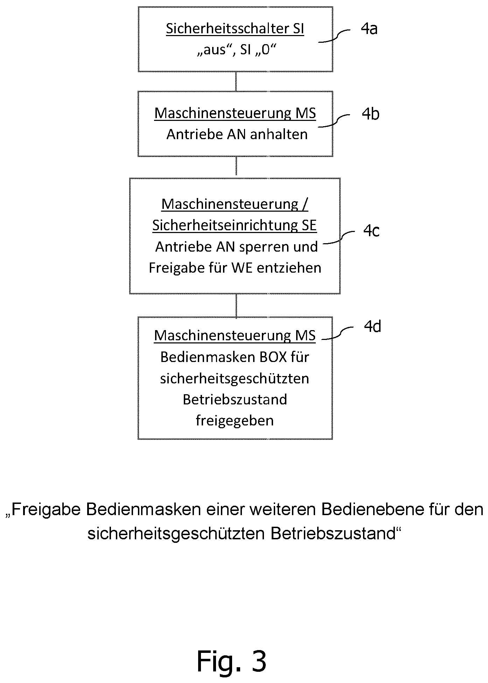

Dieses Beispiel wird am Programmablaufdiagramm in Fig. 3 und den Bezugszeichen 4a bis 4d der Prozessschritte erläutert. Es betrifft eine Umschaltung von den Bedienmasken BOM der produktiven Maschinenbedienebene auf die Bedienmasken BOX einer weiteren Bedienebene für einen sicherheitsgeschützten Betriebszustand.

Stellt ein Bediener den Sicherheitsschalter SI auf den Zustand "0", d.h. "Freigabe AUS" (4a), werden eventuell noch laufende Antriebe AN durch die Maschinensteuerung MS angehalten (4b). Zusätzlich werden die Antriebe von der Maschinensteuerung bzw. einer eventuell vorhandenen zusätzlichen Sicherheitseinheit SE gesperrt, d.h. diesen wird die Freigabe für einen Wiederanlauf (WE) entzogen (4c). Nun liegen die Voraussetzungen für eine Aktivierung der Bedienmasken BOX einer zusätzlichen Bedienebene vor. Die Maschinensteuerung MS bzw. eine eventuell vorhandene zusätzliche Sicherheitseinheit SE kann ein Signal zur Freigabe der Bedienebene für einen sicherheitsgeschützten Betriebszustand erzeugen (4d).

### Beispiel: "Aktivierung der Bedienmasken BOX für weitere Bedienebene für einen sicherheitsgeschützten Betriebszustand"

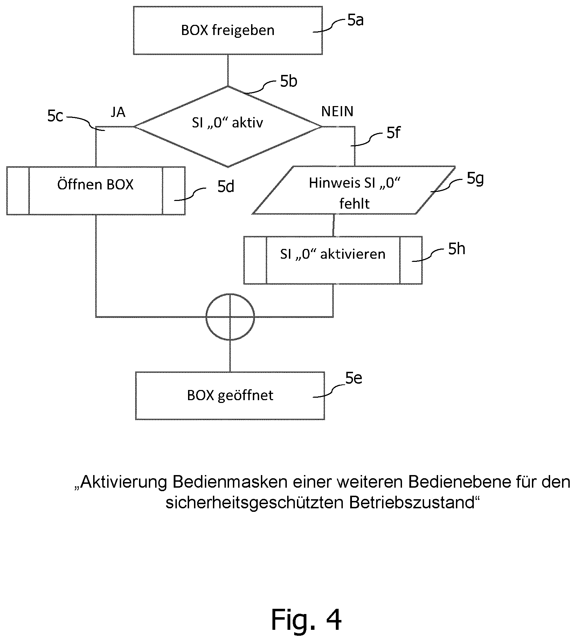

Dieses Beispiel wird am Programmablaufdiagramm in Fig. 4 und den Bezugszeichen 5a bis 5h der Prozessschritte erläutert. Möchte ein Maschinenführer auf dem HMI die Bedienmasken BOX einer weiteren Bedienebene für einen sicherheitsgeschützten Betriebszustand öffnen (5a), muss vorher der Zugang freigegeben werden. Dies ist vergleichbar mit den vorstehend anhand von Fig. 3 beschriebenen Abläufen.

Es wird nun abgefragt (5b), ob der Sicherheitsschalter SI von einem Benutzer auf den Zustand "0" Freigabe AUS gestellt wurde. Ist dies der Fall (5c), werden die Bedienmasken BOX der zusätzlichen Bedienebene automatisch oder vom Bediener durch eine Anwahl (5d, 5e) geöffnet. Befindet sich jedoch der Sicherheitsschalter SI befindet sich noch im Zustand "1" Freigabe EIN (5f), so wird dies durch eine Fehlermeldung insbesondere auf dem Maschinenbedienfeld HMI angezeigt und der Bediener aufgefordert, den Sicherheitsschalter SI in den Zustand "0" zu überführen (5g). Wird daraufhin vom Bediener der gewünschte Zustand "0" aktiviert (5h), werden die Bedienmasken BOX der zusätzlichen Bedienebene geöffnet und können vom Bediener über das HMI bedient werden.

### Beispiel: "Signalübertragung einer weiteren Bedienebene für den sicherheitsgeschützten Betriebszustand"

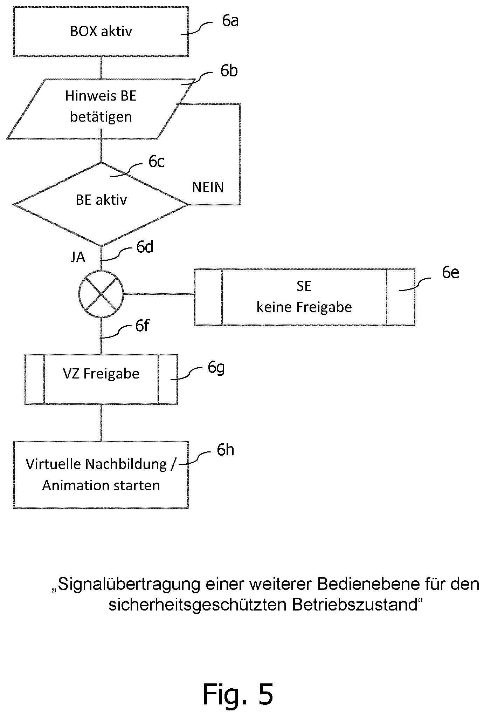

Dieses Beispiel wird am Programmablauf in Fig. 5 und den dortigen Bezugszeichen 6a bis 6h der Prozessschritte erläutert. Es betrifft einen Zustand, bei dem von der Maschinensteuerung detektiert wird, dass eine zusätzliche Bedienebene für den sicherheitsgeschützten Betriebszustand aktiviert und dazugehörige Bedienmasken BOX geöffnet sind (6a). Dabei kann es für virtuelle Nachbildungen programmtechnischer Anwendungen, z.B. zur Bearbeitungen von Werkstücken, erforderlich sein, dass Steuerungs- und Meldesignale der Werkzeugmaschine auch im sicherheitsgeschützten Betriebszustand zur Verfügung stehen. In einem solchen Fall erhält der Maschinenführer eine Aufforderung auf den Bedienmasken BOX zur Bedienung des entsprechenden manuellen Bedienelementes BE (6b) direkt an der Maschine.

Hat der Maschinenführer die manuelle Bedienung vorgenommen (6c), wird ein Quittungssignal (6d) erzeugt. Wird zudem von der Maschinensteuerung oder einer eventuell vorhandenen zusätzlichen Sicherheitseinheit SE mittels eines fehlenden sicheren Freigabesignals (keine Freigabe) (6e) detektiert, dass alle Antriebe AN sicher stillgesetzt sind, wird ein weiteres Freigabesignal (6f) erzeugt. Daraufhin wird der virtuelle Zwilling VZ freigegeben (6g), d.h. die virtuellen Nachbildungen im sicherheitsgeschützten Betriebszustand gestartet und die durch das manuelle Bedienelement BE vom Benutzer initiierte Bewegung signaltechnisch an den sicherheitsgeschützten Betriebszustand übertragen. Dies kann vom Bediener z.B. auf dem HMI über eine Animation beobachtet (6h) und z.B. von virtuellen Nachbildungen der Bewegungen von Antrieben bzw. simulierten Werkstückbearbeitungen auf den Bedienmasken BOX der zusätzlichen Bedienebene ausgewertet werden. Die Antriebe AN der Werkzeugmaschine sind dabei wie in Fig. 3 deaktiviert und gesperrt.

Die Erfindung bietet den Vorteil, dass sich virtuelle Schulungselemente auf einer weiteren zusätzlichen Bedienebene in einem sicherheitsgeschützten Betriebszustand befinden und damit sichertechnisch von der produktiven Maschinenbedienebene des produktiven Betriebszustands zur Werkstückbearbeitung isoliert sind. Hierüber und mit Hilfe eines virtuellen Zwillings der Werkzeugmaschine, welcher eine realitätsnahes Bedienbarkeit mit aktiven manuellen Bedienelementen ermöglicht, können z.B. Auszubildende gefahrlos in die Bedienung der Maschine eingewiesen werden. In den Schulungselementen können Bedienabfolgen erklärt und durch eine Kombination aus realen Bedienhandlungen an manuellen Bedienelementen der Werkzeugmaschine und den davon bereitgestellten Steuersignalen virtuell visualisiert werden. Hierbei wird erfindungsgemäß zur realen Ausführung von manuellen Bedienhandlungen an der Werkzeugmaschinen aufgefordert, ohne dass dabei Antriebe tatsächlich aktiviert werden.

Ist z.B. bei einer Drehmaschine das "Einschalten der Hauptspindel" erwünscht, muss hierzu z.B. von einem Auszubildenden der Hauptspindelschalter als das dazugehörige manuelle Bedienelement BE an der realen Drehmaschine betätigt werden. Auf Grund der Signalübertragung der realen Maschine an die weitere Bedienebene im sicherheitsgeschützten Betriebszustand wird das Betätigen des Hauptspindelschalters detektiert. Die Maschinensteuerung erkennt, dass die Einschaltung der Hauptspindel simuliert wurde und bildet den Start und die Drehung der Hauptspindel im virtuellen Zwilling nach. Dies kann vorteilhaft durch Animationen auf dem HMI visualisiert werden. Die Maschinensteuerung erkennt zwar, dass der Hauptspindelschalter betätigt wurde, verhindert aber eine tatsächliche Ingangsetzung der Hauptspindel. Die Bedienung wird als virtuell vollzogen erkannt und z.B. ein möglicher nächster Unterweisungsschritt für den Auszubildenden freigegeben.

Möchte der Bediener wieder in den produktiven Betriebszustand zurückwechseln, so muss er den Sicherheitsschalter SI auf die Position "1" Freigabe EIN zurückstellen. Dies hat zur Folge, dass die weitere Bedienebene für virtuelle Nachbildungen im sicherheitsgeschützten Betriebszustand beendet und dazugehörigen Bedienmasken BOX automatisch geschlossen werden. Simulierte Bedienungen am virtuellen Zwilling der Werkzeugmaschine sind nicht mehr möglich. Parallel dazu werden die Stellungen der manuellen Bedienelemente abgefragt. Befinden sich nicht alle in einer sicheren Grundstellung, wird das Ingangsetzen der Maschine durch die Maschinensteuerung blockiert. Vorteilhaft wird angezeigt, welche manuellen Bedienelemente vom Benutzer in die sichere Grundstellung zu bringen sind. Erst danach kann der produktive Betriebszustand mit den Bedienmasken BOM der Maschinenbedienebene gestartet und eine Bearbeitung von Werkstücken insbesondere aus einer sicheren Startposition wieder aufgenommen werden.

Die Erfindung bietet den weiteren besonderen Vorteil, dass bei Werkzeugmaschinen ein interner Austausch z.B. von Eingabe-, Steuerungs- und Meldedaten zwischen verschiedenen Betriebszuständen möglich ist. Ein solcher Fall ist insbesondere dann vorteilhaft, wenn eine weitere Bedienebene neben der produktiven Maschinenbedienebene zur Schulung von Auszubildenden an der Werkzeugmaschine mit Hilfe eines virtuellen Zwillings der Werkzeugmaschine vorhanden ist. Die reale Werkzeugmaschine kann dann zusätzlich als Simulator mit realitätsnaher Bedienbarkeit für Schulungszwecke verwendet werden. Einer weiterer Vorteil wird dar gesehen, dass die Erfindung durch programmtechnische Ergänzungen der Software der Maschinensteuerung realisierbar ist und auf jeder bereits vorhandenen Werkzeugmaschine ausgeführt werden, z.B. auf einer konventionellen Leit- und Zugspindeldrehmaschine. Eine Nachrüstung von Hardware ist nicht erforderlich, z.B. ein weiteres Maschinenbedienfeld HMI oder eine zusätzliche Sicherungseinheit.

Die Erfindung kann für viele Arten von Werkzeugmaschinen angewendet werden, z.B. für Dreh-, Fräs-, Schleif- und Bohrmaschinen. Werkzeugmaschinen, die mit der Erfindung ausgestattet sind, bieten Benutzern einen erweiterten Einsatzbereich. Diese sind sowohl im produktiven Betrieb zur Werkstückbearbeitung als auch z.B. zur realitätsnahen Schulung von Auszubildenden mit Hilfe virtuellen Nachbildungen im einem sicherheitsgeschützten Betriebszustand einsetzbar. Besonders vorteilhaft sind Umschaltungen zwischen diesen Betriebszuständen und die Aktivierung der jeweils benötigten Bedienebene BOM bzw. BOX auf einem HMI schnell und sicher möglich.

### Bezugszeichenliste

- MS: Maschinensteuerung
- AN: Antriebe
- HMI: bildschirmgeführtes Maschinenbedienfeld
- BE: manuell betätigbare Bedienelemente
- BOM: Bedienmasken der Maschinenbedienebene im produktiven Betriebszustand
- BO1, BO2 ... BOX: Bedienmasken 1, 2 bis x einer weiteren Bedienebenen zur virtuellen Nachbildung im sicherheitsgeschützten Betriebszustand
- VZ: "virtueller Zwilling"
- SI: zentraler Sicherheitsschalter
- SI "1": Sicherheitsschalter Zustand 1 = Freigabe EIN
- SI "0": Sicherheitsschalter Zustand 0 = Freigabe AUS
- SE: zusätzliche Sicherheitseinheit
- 2a: bildschirmgeführtes Maschinenbedienfeld HMI
- 2b: Zugspindelantrieb
- 2c: dezidierte Sicherheitsbaugruppe als zusätzliche Sicherheitseinheit
- 2d: manuell verschiebbare Spindelschutzhaube mit überwachbarem Endschalter
- 2e: Oberschlitten mit überwachbarem Wegmesssystem
- 2f: Bettschlitten mit überwachbarem Wegmesssystem
- 2g: Hauptschalter der Werkzeugmaschine am Maschinengehäuse
- 2h: Leitspindel
- 2i: Zugspindel
- 2k: Hauptspindelantrieb
- 2l: Spindelstock

## Patentansprüche

1. Werkzeugmaschine, insbesondere eine Dreh- bzw. Fräsmaschine, bevorzugt eine konventionelle Leit- und Zugspindeldrehmaschine, mit
- Antrieben (AN) als Maschinenbetriebsmittel zur Durchführung von Werkstückbearbeitungen,
- manuellen Bedienelementen (BE) für die Maschinenbetriebsmittel,
- einer Maschinensteuerung (MS), welche bereitstellt
- einen produktiven Betriebszustand zur Werkstückbearbeitung und
- einen sicherheitsgeschützten Betriebszustand für eine realitätsnahe Bedienbarkeit der Werkzeugmaschine mit
- aktiven manuellen Bedienelementen (BE),
- deaktivierten Antrieben der Maschinenbetriebsmittel und
- virtuellen Nachbildungen von Schaltzuständen der manuellen Bedienelemente und/oder der Bewegungen von Antrieben und/oder Bearbeitungen von Werkstücken wie im produktiven Betriebszustand, und
- einem bildschirmgeführten Maschinenbedienfeld (HMI), worüber die Werkzeugmaschine zwischen dem produktiven und sicherheitsgeschützten Betriebszustand umgeschaltet werden kann,
**gekennzeichnet durch**
- einen manuell bedienbaren Sicherheitsschalter (SI) zur zentralen Freigabe oder Stillsetzung der Antriebe der Maschinenbetriebsmittel,
wobei die Maschinensteuerung (MS)
- den Zustand des Sicherheitsschalters (SI) überwacht und
- eine Umschaltung vom produktiven in den sicherheitsgeschützten Betriebszustand nur dann freigibt, wenn diese
- am Sicherheitsschalter (SI) den Zustand "Freigabe AUS" und
- eine Stillsetzung der Antriebe
detektiert.

2. Werkzeugmaschine nach Anspruch 1, wobei die Maschinensteuerung (MS) auf dem bildschirmgeführten Maschinenbedienfeld (HMI) entweder
- Bedienmasken (BOM) einer produktiven Maschinenbedienebene für die Werkstückbearbeitungen im produktiven Betriebszustand, oder
- Bedienmasken (BOX) einer weiteren Bedienebene für die virtuellen Nachbildungen im sicherheitsgeschützten Betriebszustand anzeigt.

3. Werkzeugmaschine nach Anspruch 1, wobei
- die manuellen Bedienelemente (BE) als mindestens einen Schaltzustand einen sicheren Grundzustand aufweisen, in dem ein zugehöriges Maschinenbetriebsmittel nicht aktiviert ist,
und die Maschinensteuerung (MS)
- die Schaltzustände der manuellen Bedienelemente (BE) überwacht und
- eine Umschaltung vom sicherheitsgeschützten in den produktiven Betriebszustand nur dann freigibt, wenn diese
- am Sicherheitsschalter (SI) den Zustand "Freigabe EIN" und
- einen sicheren Grundzustand der manuellen Bedienelemente (BE) detektiert.

## Claims

1. Machine tool, in particular a lathe respectively a milling machine, preferably a conventional lathe with a lead screw and a feed shaft, with
- drives (AN) as machine operating means for performing workpiece machining operations,
- manual control elements (BE) for the machine operating means,
- a machine control unit (MS), which provides
- a productive state of operation for workpiece machining operations and
- a safety-protected state of operation for a realistic operability of the machine tool with
- active manual control elements (BE),
- deactivated drives of the machine operating means and
- virtual emulations of switching states of the manual control elements and/or the movements of the drives and/or the machining of workpieces as in the productive state of operation, and
- a screen-guided machine control panel (HMI), with which the machine tool can be switched between the productive and the safety-protected state of operation,
**characterized by**
- a manually operable safety switch (SI) for centrally enabling or disabling the drives of the machine operating means,
whereby the machine control unit (MS)
- monitors the state of the safety switch (SI) and
- only enables a switchover from the productive to the safety-protected state of operation, if it detects
- the state "Enable OFF" on the safety switch (SI) and
- a stopping of the drives.

2. Machine tool according to claim 1, whereby the machine control unit (MS) on the screen-guided machine control panel (HMI) displays either
- user interfaces (BOM) of a productive machine control layer for workpiece machining operations in a productive state of operation, or
- user interfaces (BOX) of a further control layer for the virtual emulations in the safety-protected state of operation.

3. Machine tool according to claim 1, whereby
- the manual controls elements (BE) as at least one switching state feature a safe default state, in which a corresponding machine operating means is not activated,
and the machine control unit (MS)
- monitors the switching states of the manual control elements (BE) and
- only enables a switchover from the safety-protected to the productive state of operation, if it detects
- the state "Enable ON" on the safety switch (SI) and
- a safe default state of the manual control elements (BE).

## Revendications

1. Machine-outil, en particulier un tour ou une fraiseuse, de préférence un tour parallèle à charioter et fileter conventionnel, comportant
- des entraînements (AN) comme moyens de fonctionnement de machine pour la mise en œuvre d'usinages de pièces,
- des éléments de manipulation manuels (BE) pour les moyens de fonctionnement de machine,
- une commande de machine (MS) fournissant
- un état de fonctionnement productif pour l'usinage de pièce, et
- un état de fonctionnement protégé par sécurité pour une possibilité d'actionnement proche de la réalité de la machine-outil, avec
- les éléments de manipulation manuels (BE) actifs,
- les entraînements désactivés des moyens de fonctionnement de machine, et
- des reproductions virtuelles des états de commutation des éléments de manipulation manuels et/ou des mouvements des entraînements et/ou des usinages de pièces comme dans l'état de fonctionnement productif, et
- un champ de manipulation de machine guidé par écran (HMI), moyennant quoi la machine-outil peut être commutée entre le mode de fonctionnement productif et le mode de fonctionnement protégé par sécurité,
**caractérisée par**
- un commutateur de sécurité (SI) à manipulation manuelle pour la libération ou l'arrêt centralisé des entraînements des moyens de fonctionnement de machine,
dans laquelle la commande de machine (MS)
- surveille l'état du commutateur de sécurité (SI), et
- libère une commutation de l'état de fonctionnement productif à l'état de fonctionnement protégé par sécurité uniquement si celle-ci détecte
- l'état « Libération DÉSACTIVÉE » au niveau du commutateur de sécurité (SI), et
- un arrêt des entraînements.

2. Machine-outil selon la revendication 1, dans laquelle la commande de machine (MS) affiche sur le champ de manipulation de machine guidé par écran (HMI), soit
- des masques de manipulation (BOM) d'un plan de manipulation de machine productif pour les usinages de pièces à l'état de fonctionnement productif, soit
- des masques de manipulation (BOX) d'un autre plan de manipulation pour les reproductions virtuelles à l'état de fonctionnement protégé par sécurité.

3. Machine-outil selon la revendication 1, dans laquelle
- les éléments de manipulation manuels (BE) présentent comme au moins un état de commutation un état de base sûr dans lequel un moyen de fonctionnement de machine associé n'est pas activé,
et la commande de machine (MS)
- surveille les états de commutation des éléments de manipulation manuels (BE), et
- libère une commutation de l'état de fonctionnement protégé par sécurité à l'état de fonctionnement productif uniquement si celle-ci détecte
- l'état « Libération ACTIVÉE » au niveau du commutateur de sécurité (SI), et
- un état de base sûr des éléments de manipulation manuels (BE).
